# EUROPÄISCHE PATENTSCHRIFT

(11) **EP 2 990 621 B1**
(45) Veröffentlichungstag und Bekanntmachung des Hinweises auf die Patenterteilung: **21.02.2018**
(21) Anmeldenummer: 15180572.8
(22) Anmeldetag: 11.08.2015
(51) Int. Cl.: F01M 11/04, F16H 57/04, F16L 37/248

(54) **VERSCHLUSSEINRICHTUNG**
LOCKING DEVICE
DISPOSITIF DE VERROUILLAGE

(30) Priorität: 27.08.2014 DE 102014217036
(43) Veröffentlichungstag der Anmeldung: 02.03.2016
(73) Patentinhaber: Mahle International GmbH, 70376 Stuttgart (DE)
(72) Erfinder: Dunsch, Robert, 71665 Vaihingen (DE)
(74) Vertreter: BRP Renaud & Partner mbB Rechtsanwälte Patentanwälte Steuerberater

(56) Entgegenhaltungen:
- EP-A1- 0 829 626
- EP-A1- 2 444 604
- DE-A1- 4 329 774
- DE-A1- 19 730 672
- DE-A1-102012 220 695
- US-A- 5 443 175

## Beschreibung

Die vorliegende Erfindung betrifft eine Verschlusseinrichtung für eine Fluidleitung mit einem Eingriffsstutzen und einem darin von außen einsetzbaren Verschlusselement gemäß dem Oberbegriff des Anspruchs 1. Die Erfindung betrifft außerdem ein als Kunststoffspritzgussteil ausgebildetes Ölfiltermodul mit einer solchen Verschlusseinrichtung.
Aus der DE 200 06 755 U1 ist eine gattungsgemäße Verschlusseinrichtung für eine Fluidleitung mit einem Eingriffsstutzen und einem daran von außen einsetzbaren Verschlusselement bekannt, wobei der Eingriffsstutzen und das Verschlusselement komplementär zueinander ausgebildete Eingriffselemente zwecks Bildung einer Bajonettverbindung aufweisen. Diese Eingriffselemente sind durch Bewegung des Verschlusselements gegenüber dem Eingriffsstutzen aus einer Anfangsstellung ohne Eingriff über einen daran anschließenden Eingriffsweg in eine Endstellung und umgekehrt bringbar, wobei eine Sicherungseinrichtung gegenüber selbsttätiges Abfallen des Verschlusselements derart angeordnet und ausgebildet ist, dass sie in einem bestimmten Bewegungsbereich des Verschlusselements einen erhöhten Bewegungswiderstand erzeugt. Die Sicherungseinrichtung ist dabei derart angeordnet, dass sie im freien Abstand zur Endstellung wirksam ist. Hierdurch soll sichergestellt werden, dass die Sicherungseinrichtung beim Verschließen des Verschlusselements auch tatsächlich überfahren wird.
Aus der DE 10 2009 011 941 A1 ist eine Verschlussschraube für Öffnungen an Kraftfahrzeugmotoren, wie Ölablassöffnungen bekannt, wobei diese Verschlussschraube einen Schraubenschaft mit Gewinde aufweist. Der Schraubenschaft ist dabei mit einem Schraubenkopf verbunden, an dem ein erstes Rastelement angeordnet ist, dass mit einem an der Öffnung angeordneten zweiten Rastelement zusammenwirkt. Um ein mehrfaches Öffnen und Schließen der Verschluss schraube sicherstellen zu können, ist das erste Rastelement elastisch federnd mit dem Schraubenkopf verbunden.

Aus der EP 0 829 626 A1 ist eine Verschlusseinrichtung für eine Fluidleitung mit einem Eingriffsstutzen und einem darin von außen einsetzbaren Verschlusselement bekannt, wobei der Eingriffsstutzen und das Verschlusselement komplementär zueinander ausgebildete Eingriffselemente und zwecks Bildung einer Bajonettverbindung besitzen. Am Verschlusselement sind dabei zumindest zwei Bajonettflügel und am Eingriffsstutzen zumindest zwei komplementär dazu ausgebildete Hinterschnitte angeordnet.

Aus der DE 197 30 672 A1 ist ebenfalls eine Verschlusseinrichtung für eine Fluidleitung mit einem Eingriffstutzen und einem darin von außen einsetzbaren Verschlusselement bekannt, wobei der Eingriffstutzen und das Verschlusselement komplementär zueinander ausgebildete Eingriffselemente zwecks Bildung einer Bajonettverbindung aufweisen und wobei das Verschlusselement zumindest zwei Bajonettflügel und am Eingriffsstutzen zumindest zwei komplementär dazu ausgebildete Hinterschnitte aufweist.

Aus der DE 10 2012 220 695 A1 ist ein weiteres Verschlusselement mit Bajonettflügeln bekannt.

Ablassschrauben bzw. Verschlusselemente zum Verschließen von Druckleitungen, beispielsweise an einem Ölfiltermodul, sind üblicherweise aus Kunststoff ausgebildet und dienen einem dauerhaften Verschließen entsprechender Öffnungen in dem Ölfiltermodul. Diese Öffnungen in dem Ölfiltermodul entstehen bei der Herstellung der inneren Kanäle, da eventuell Schieber für die Kanalbildung aus dem Spritzgusswerkzeug gezogen werden müssen. Durch diese Schieber können wiederum komplexe Kanalstrukturen im Modul erzeugt werden, wobei bisher auf eine solche komplexe Kanalstruktur verzichtet wurde, um das zusätzliche Verschließen der hierdurch bedingten Öffnungen zu vermeiden. Eine solche komplexe Kanalstruktur im Ölfiltermodul hat jedoch erhebliche Vorteile und ist deshalb wünschenswert.

Die vorliegende Erfindung beschäftigt sich daher mit dem Problem, für eine Verschlusseinrichtung der gattungsgemäßen Art eine verbesserte oder zumindest alternative Ausführungsform anzugeben, mittels welcher insbesondere bei der Herstellung eines Ölfiltermoduls durch komplexe Kanalstrukturen bedingte Öffnungen vergleichsweise einfach und dauerhaft verschlossen werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Verschlusselement über eine Bajonettverbindung in einen Eingriffsstutzen einer Fluidleitung, beispielsweise einer Öldruckleitung bei einem Ölfiltermodul, einzusetzen und zugleich eine Losdrehsicherung vorzusehen, deren Widerstand gegen Losdrehen mit zunehmendem Innendruck ansteigt. Der Eingriffsstutzen und das Verschlusselement weisen dabei komplementär zueinander ausgebildete Eingriffselemente zwecks Bildung der Bajonettverbindung auf. Am Verschlusselement sind dabei zwei Eingriffselement in der Art von Bajonettflügel angeordnet, wogegen am Eingriffsstutzen zumindest zwei komplementär dazu ausgebildete Hinterschnitte vorgesehen sind. An zumindest einem Bajonettflügel ist erfindungsgemäß ein nach außen abstehendes Fixierelement angeformt, welches bei geschlossener Bajonettverbindung in eine am zugehörigen Hinterschnitt ausgebildete Ausnehmung eingreift und dadurch eine mit ansteigendem Innendruck zunehmend schwer lösbare Losdrehsicherung bewirkt. Selbstverständlich kann dabei auch ein nach innen abstehendes Fixierelement am Hinterschnitt des Eingriffsstutzens vorgesehen sein und eine entsprechende Ausnehmung am zugehörigen Bajonettflügel. Auch diese Ausführungsform würde bewirken, dass die Losdrehsicherung bei steigendem Innendruck eine zunehmend schwerer lösbare Hürde darstellt. Mit der erfindungsgemäßen Verschlusseinrichtung ist somit eine kostengünstige Lösung zum Verschließen von Öffnungen in einem Kunststoffmodul, insbesondere in einem als Kunststoffspritzgussteil ausgebildeten Ölfiltermodul erzielbar, da keine weitere Bearbeitung der Oberfläche, beispielsweise das Eindrehen eines Gewindes, erforderlich ist. Durch die erfindungsgemäß vorgesehene Losdrehsicherung auf der drucklosen Seite kann darüber hinaus auch bei einem pulsierenden Innendruck zuverlässig gewährleistet werden, dass sich das Verschlusselement nicht unbeabsichtigt löst. Die Losdrehsicherung wird dabei durch den Innendruck unterstützt. Erfindungsgemäß weist das zumindest eine Fixierelement eine Rastkontur, insbesondere eine Rastnase auf, wogegen in der Ausnehmung eine zugehörige Gegenrastkontur angeordnet ist. Mit einer derartigen Rastkontur kann das Verschlusselement auch in besonders einfacher aber wirkungsvoller Weise gegen ein axiales Selbstlösen gesichert werden.

Bei einer dazu alternativen Ausführungsform kann die Losdrehsicherung des Verschlusselements in der Form einer Federzunge gestaltet sein, so dass nach dem einmaligen Verbau eine nicht lösbare Verbindung erzeugt wird. Auch bei dieser Variante unterstützt der Innendruck die Losdrehsicherung.

Bei einer vorteilhaften Weiterbildung der erfindungsgemäßen Lösung ist an dem Verschlusselement eine O-Ringdichtung angeordnet, welche sich dichtend an eine Innenmantelfläche der Fluidleitung anlegt. Eine derartige O-Ringdichtung, die beispielsweise in einer entsprechenden Nut am Verschlusselement eingelegt ist, stellt eine kostengünstige und äußerst flexible Dichtungsart dar, so dass das Verschlusselement durch Austauschen der jeweiligen O-Ringdichtungen auch an unterschiedlichste Fluide leicht adaptierbar ist.

Bei eine vorteilhaften Weiterbildung der erfindungsgemäßen Lösung weisen die zumindest zwei Bajonettflügel des Verschlusselements jeweils eine Radialerstreckung auf, die zumindest einem Drittel des Durchmessers der O-Ringdichtung entspricht. Durch die vergleichsweise breiten und großen Bajonettflügel kann eine große Anlagefläche für große Innendrücke bereitgehalten werden, wodurch die erfindungsgemäße Verschlusseinrichtung selbst zum Verschließen von Hochdruckleitungen einsetzbar ist.

Zweckmäßig ist am Verschlusselement eine Eingriffskontur für ein Drehwerkzeug, insbesondere ein Innenmehrkant, angeordnet. Eine derartige Eingriffskontur lässt sich einerseits bei einem als Kunststoffspritzgussteil hergestellten Verschlusselement äußerst einfach darstellen, ermöglicht andererseits jedoch auch ein vergleichsweise einfaches Aufbringen eines hohen Drehmoments. Durch die Ausbildung des Verschlusselements bzw. des Eingriffsstutzens als Kunststoffspritzgussteil ist zudem eine kostengünstige, gleichfalls auch qualitativ hochwertige Herstellung dieser Bauteile möglich.
Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
Dabei zeigen, jeweils schematisch,
- Fig. 1a: eine Verschlusseinrichtung in einer Explosionsdarstellung,
- Fig.: 1b eine Darstellung wie in Fig. 1a, kurz vor dem Einsetzen des Verschlusselements in den Eingriffsstutzen der Fluidleitung,
- Fig. 2a: eine Draufsicht auf die Verschlusseinrichtung bei lose eingesetztem Verschlusselement,
- Fig. 2b: eine Darstellung wie in Fig. 2a, jedoch bei verdrehtem und gesichertem Verschlusselement,
- Fig. 3a: eine Schnittdarstellung durch die Verschlusseinrichtung in drucklosem Zustand,
- Fig. 3b: eine Darstellung wie in Fig. 3a, jedoch unter erhöhtem Innendruck,
- Fig. 4: eine Detailansicht eines erfindungsgemäßen Verschlusselements mit zusätzlichen Rastkonturen am Fixierelement,
- Fig. 5: eine Schnittdarstellung durch die erfindungsgemäße Verschlusseinrichtung mit einem Verschlusselement gemäß der Fig. 4,
- Fig. 6: eine Detaildarstellung aus Fig. 5 im Bereich des Fixierelements mit Rastkontur.

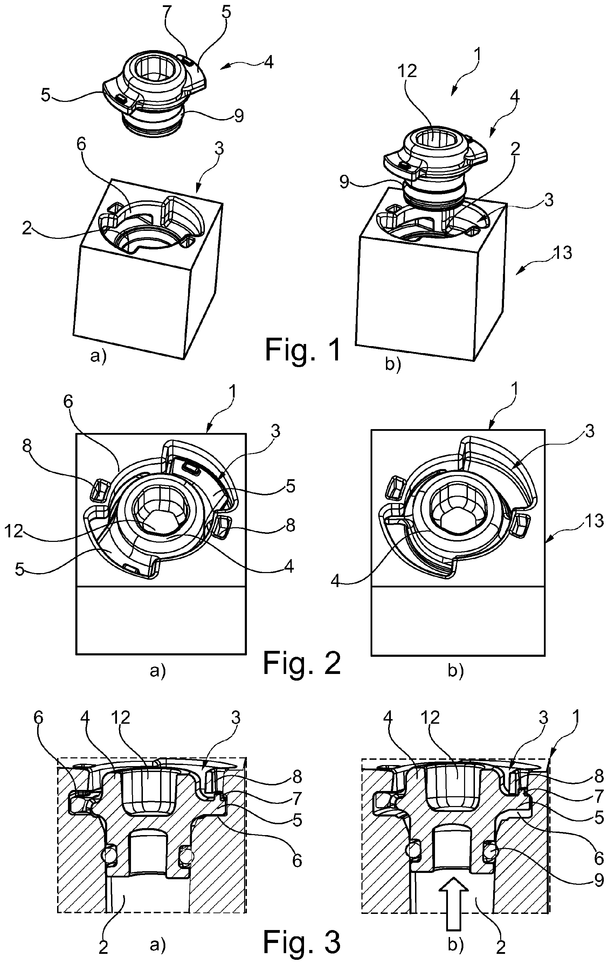

Entsprechend den Fig. 1 bis 3 sowie 5 und 6, weist eine Verschlusseinrichtung 1 für eine Fluidleitung 2 einen Eingriffsstutzen 3 und ein darin von außen einsetzbares Verschlusselement 4 auf. Das Verschlusselement 4 besitzt zumindest zwei Bajonettflügel 5, wogegen am Eingriffsstutzen 3 zumindest zwei komplementär dazu ausgebildete Hinterschnitte 6 angeordnet sind. Die Bajonettflügel 5 und die Hinterschnitte 6 bilden dabei Eingriffselemente, die zusammen eine Bajonettverbindung bilden.

An zumindest einem Bajonettflügel 5 ist dabei ein nach außen abstehendes Fixierelement 7 angeformt, welches bei geschlossener Bajonettverbindung in eine am zugehörigen Hinterschnitt 6 ausgebildete Ausnehmung 8 eingreift, so dass sich das Verschlusselement 4 bei ansteigendem Innendruck innerhalb der Fluidleitung 2 zunehmend schwer losdrehen lässt. Selbstverständlich könnte dabei das Fixierelement 7 auch im Bereich des Hinterschnittes 6 angeordnet sein und der zugehörige Bajonettflügel 5 eine zugehörige Ausnehmung 8 aufweisen, wobei in diesem Fall das Fixierelement 7 am Hinterschnitt 6 nach innen abstehen würde. Eine derartige Ausführungsform ist jedoch nicht gezeigt.

Mit der Verschlusseinrichtung 1 kann eine kostengünstige Lösung zum Verschließen von Öffnungen (Eingriffsstutzen 3) in einem Kunststoffmodul, insbesondere in einem Ölfiltermodul 13, geschaffen werden, da keine weitere Behandlung der Oberfläche, beispielsweise das Einschneiden eines Gewindes, erforderlich ist. Die erfindungsgemäße Losdrehsicherung, die aus den Fixierelementen 7 und den zugehörigen Ausnehmungen 8 gebildet ist, wird durch den in der Fluidleitung 2 herrschenden Innendruck unterstützt, wodurch verhindert wird, dass sich bei Zu- und Abnahme des Innendrucks, das heißt bei Pulsationen, das Verschlusselement 4 unbeabsichtigt selbstständig lösen kann. Bei den aus dem Stand der Technik bekannten Losdrehsicherungen für Verschlusselemente werden diese durch den Innendruck nicht unterstützt, sondern eher geschwächt.
Betrachtet man die Fig. 1 sowie 3 bis 5 weiter, so kann man erkennen, dass an dem Verschlusselement 4 eine O-Ringdichtung 9 angeordnet ist, welche sich dichtend an eine Innenmantelfläche der Fluidleitung 2 anlegt und dadurch diese abdichtet. Die zumindest zwei Bajonettflügel 5 besitzen vorzugsweise eine Radialerstreckung, die zumindest einem Drittel des Durchmessers dieser O-Ringdichtung 9 entspricht, wodurch sich eine vergleichsweise breite Auflagefläche zur Aufnahme auch von hohen Innendrücken ergibt. Durch die vergleichsweise breiten Bajonettflügel 5 lassen sich somit auch Hochdruckleitungen zuverlässig verschließen. Unterstützt werden kann dies zusätzlich dadurch, dass sich jeder Bajonettflügel 5 darüber hinaus über einen Umfangswinkel von zumindest 25° oder mehr erstreckt.

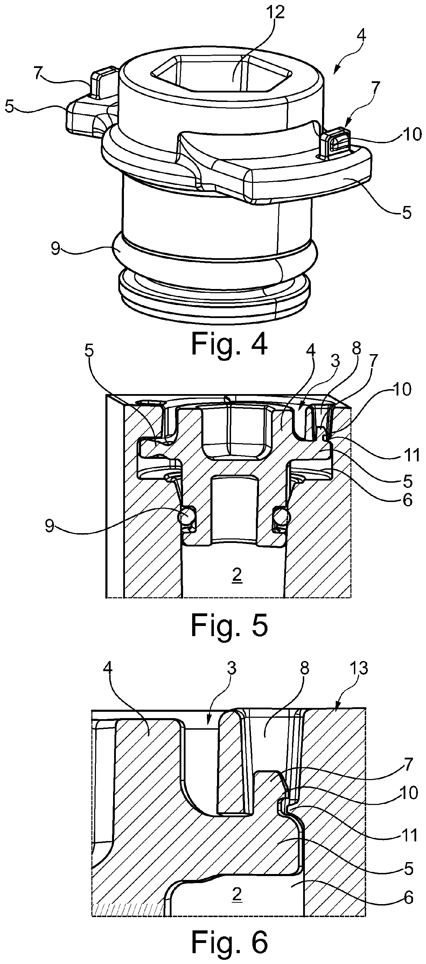

Betrachtet man die Fixierelemente 7 des Verschlusselementes 4 gemäß den Fig. 4 bis 6, so kann man erkennen, dass daran zusätzlich eine Rastkontur 10, genauer gesagt eine Rastnase, angeordnet ist, wogegen in der Ausnehmung 8 eine zugehörige Gegenrastkontur 11 (vgl. insbesondere die Fig. 6) angeordnet ist. Durch diese Rastkontur 10 bzw. die Gegenrastkontur 11 kann auch ein unbeabsichtigtes axiales Verstellen des Verschlusselements 4 zuverlässig vermieden werden.

Das Verschlusselement 4 und/oder der Eingriffsstutzen 3 sind vorzugsweise als Kunststoffspritzgussteile ausgebildet, wodurch deren Herstellung nicht nur kostengünstig, sondern zugleich auch qualitativ höchstwertig möglich ist. Kunststoff bietet darüber hinaus in Bezug auf Metall den großen Vorteil, dass es ein deutlich geringeres Gewicht aufweist, was insbesondere bei einer Anwendung im Fahrzeugbau von großem Vorteil ist.

An dem Verschlusselement 4 selbst kann darüber hinaus eine Eingriffskontur 12, insbesondere ein Innenmehrkant für ein Drehwerkzeug, beispielsweise einen Imbusschlüssel, angeordnet sein. Hierdurch ist ein vergleichsweise einfaches aufbringen des vergleichsweise hohen Drehmoments möglich.

Durch das erfindungsgemäße Verschlusselement 4 und den zugehörigen Eingriffsstutzen 3 lassen sich insbesondere Öffnungen bei als Kunststoffspritzgussteil hergestellten Ölfiltermodulen 13 vergleichsweise einfach verschließen, ohne dass hierfür beispielsweise das Einschneiden eines Gewindes und das anschließende Eindrehen einer Verschlussschraube erforderlich wären. Es ist somit möglich, auch vergleichsweise komplexe Kanalstrukturen in dem Ölfiltermodul 13 zu erzeugen, welche lediglich mittels spezieller Schieber, die aus dem Spritzgusswerkzeug gezogen werden müssen, gebildet werden können. Ein derartiges Ölfiltermodul 13 soll dabei lediglich rein exemplarisch als Anwendungsgebiet verstanden werden, so dass die erfindungsgemäße Verschlusseinrichtung 1 generell für sämtliche Hochdruckleitungen problemlos anwendbar ist. Die hierfür erforderlich Bajonettmimik lässt sich darüber hinaus äußerst einfach in Kunststoffspritzwerkzeugen abbilden, wodurch die Verschlusseinrichtung 1 darüber hinaus kostengünstig, insbesondere bei hohen Stückzahlen herstellbar ist.

Ein Verschließen der Verschlusseinrichtung 1 mittels des Verschlusselements 4 erfolgt dabei wie folgt: Zunächst wird das Verschlusselement 4 gemäß den Fig. 1 a und 2a derart zu dem Eingriffsstutzen 3 ausgerichtet, dass die Bajonettflügel 5 des Verschlusselements 4 vorbei an den Hinterschnitten 6 in den Eingriffsstutzen 3 eingeführt werden können. Ein Fixieren des Verschlusselements 4 erfolgt dann durch ein Verdrehen des Verschlusselements 4, bis dessen Bajonettflügel 5 in die Hinterschnitte 6 einfahren, wie dies gemäß den Fig. 2b, 3, 5 und 6 dargestellt ist. Nach Erreichen einer Endlage fluchten die Fixierelemente 7 an den Bajonettflügeln 5 mit den Ausnehmungen 8 an den Hinterschnitten 6, wie es beispielsweise der Fig. 3a zu entnehmen ist. Ein Eingreifen der Fixierelemente 7 in die Ausnehmungen 8 erfolgt jedoch erst ab einem bestimmten Innendruck innerhalb der Fluidleitung 2, wie dies beispielsweise gemäß der Fig. 3b dargestellt ist. In diesem Zustand verhindern die Fixierelemente 7 ein Zurückdrehen bzw. überhaupt ein Verdrehen des Verschlusselements 4, wobei der in der Fluidleitung 2 herrschende Innendruck die Fixierelemente 7 in die Ausnehmungen 8 an den Hinterschnitten 6 drückt und dadurch die Losdrehsicherung sichert. Soll das Verschlusselement 4 wieder aus dem Einfüllstutzen 3 entnommen werden, so musste es zunächst in Axialrichtung nach innen in die Fluidleitung 2 gedrückt werden, bis die Fixierelemente 7 aus den Ausnehmungen 8 herausgefahren sind, um anschließend das Verschlusselement 4 so weit zu drehen, dass die Bajonettflügel 5 desselben nicht mehr in die Hinterschnitte 6 eingreifen. Anschließend kann das Verschlusselement 4 entnommen werden.

In einer Variante kann die Losdrehsicherung des Verschlusselements 4 in der Form einer Federzunge gestaltet sein, so dass nach dem einmaligen Verbau eine nicht lösbare Verbindung erzeugt wird. Auch bei dieser Variante unterstützt der Innendruck die Losdrehsicherung.

## Patentansprüche

1. Verschlusseinrichtung (1) für eine Fluidleitung (2) mit einem Eingriffsstutzen (3) und einem darin von außen einsetzbaren Verschlusselement (4), wobei der Eingriffsstutzen (3) und das Verschlusselement (4) komplementär zueinander ausgebildete Eingriffselemente zwecks Bildung einer Bajonettverbindung aufweisen, wobei
- das Verschlusselement (4) zumindest zwei Bajonettflügel (5) aufweist und am Eingriffsstutzen (3) zumindest zwei komplementär dazu ausgebildete Hinterschnitte (6) vorgesehen sind,
- an zumindest einem Bajonettflügel (5) ein nach außen abstehendes Fixierelement (7) angeformt ist, welches bei geschlossener Bajonettverbindung in eine am zugehörigen Hinterschnitt (6) ausgebildete Ausnehmung (8) eingreift, oder umgekehrt, so dass sich das Verschlusselement (4) mit ansteigendem Innendruck zunehmend schwer losdrehen lässt,
**dadurch gekennzeichnet,**
- **dass** das zumindest eine Fixierelement (7) eine Rastkontur (10), insbesondere eine Rastnase, aufweist, wogegen in der Ausnehmung (8) eine zugehörige Gegenrastkontur (11) angeordnet ist,
- **dass** mit der Rastkontur (10) das Verschlusselement (4) gegen ein axiales Selbstlösen gesichert ist.

2. Verschlusseinrichtung nach Anspruch 1,
**dadurch gekennzeichnet,**
**dass** an dem Verschlusselement (4) eine O-Ringdichtung (9) angeordnet ist, welche sich dichtend an eine Innenmantelfläche der Fluidleitung (2) anlegt.

3. Verschlusseinrichtung nach Anspruch 2,
**dadurch gekennzeichnet,**
**dass** die zumindest zwei Bajonettflügel (5) jeweils eine Radialerstreckung aufweisen, die einem Drittel des Durchmessers der O-Ringdichtung (9) entspricht.

4. Verschlusseinrichtung nach einem der Ansprüche 1 bis 3,
**dadurch gekennzeichnet,**
**dass** das Verschlusselement (4) und/oder der Eingriffsstutzen (3) als Kunststoffspritzgussteil ausgebildet sind/ist.

5. Verschlusseinrichtung nach einem der Ansprüche 1 bis 4,
**dadurch gekennzeichnet,**
**dass** sich jeder Bajonettflügel (3) über einen Umfangswinkel von zumindest 25° erstreckt.

6. Verschlusseinrichtung nach einem der Ansprüche 1 bis 5,
**dadurch gekennzeichnet,**
**dass** am Verschlusselement (4) eine Eingriffskontur (12) für ein Drehwerkzeug, insbesondere ein Innenmehrkant, angeordnet ist.

7. Als Kunststoffspritzgussteil ausgebildetes Ölfiltermodul (13) mit einer Verschlusseinrichtung (1) nach einem der Ansprüche 1 bis 6 zum Verschließen einer druckbeaufschlagten Fluidleitung (2), insbesondere einer Ölleitung.

## Claims

1. Locking device (1) for a fluid line (2) comprising an engagement connection (3) and a locking element (4) which can be inserted in the latter from the outside, wherein the engagement connection (3) and the locking element (4) have engagement elements which are complementary to one another for forming a bayonet connection, wherein
- the locking element (4) comprises at least two bayonet wings (5) and on the engagement connection (3) at least two complementary designed undercuts (6) are provided,
- on at least one bayonet wing (5) an outwardly projecting fixing element (7) is formed which when the bayonet connection is closed engages in a recess (8) formed on an associated undercut (6), or vice versa so that with increasing internal pressure the locking element (4) can be loosened with increasing difficulty,
**characterised in that**
- the at least one fixing element (7) has a locking contour (10), in particular a locking nose, whereas in the recess (8) an associated counter locking contour (11) is provided,
- by means of the locking contour (10) the locking element (4) is prevented from loosening axially.

2. Locking device according to claim 1, **characterised in that** on the locking element (4) an O-ring seal (9) is arranged which bears in a sealing manner on an inner casing surface of the fluid line (2).

3. Locking device according to claim 2, **characterised in that** the at least two bayonet wings (5) each have a radial extension which corresponds to a third of the diameter of the O-ring seal (9).

4. Locking device according to any of claims 1 to 3, **characterised in that** the locking element (4) and/or the engagement connection (3) is/are designed as a plastic injection moulding.

5. Locking device according to any of claims 1 to 4, **characterised in that** each bayonet wing (3) extends over a circumferential angle of at least 25°.

6. Locking device according to any of claims 1 to 5, **characterised in that** on the locking element (4) an engagement contour (12) is provided for a rotary tool, in particular an internal polygon.

7. Oil filter module (13) designed as a plastic injection moulding comprising a locking device (1) according to any of claims 1 to 6 for locking a pressurised fluid line (2), in particular an oil line.

## Revendications

1. Dispositif de fermeture (1) pour une conduite fluidique (2) avec une tubulure de prise (3) et un élément de fermeture (4) insérable dans celle-ci de l'extérieur, dans lequel la tubulure de prise (3) et l'élément de fermeture (4) présentent des éléments de prise réalisés de manière complémentaire l'un à l'autre en vue de la formation d'une liaison à baïonnette, dans lequel
- l'élément de fermeture (4) présente au moins deux ailes de baïonnette (5) et, au niveau de la tubulure de prise (3), au moins deux contre-dépouilles (6) réalisées de manière complémentaire à celles-ci sont prévues,
- au niveau d'au moins une aile de baïonnette (5), un élément de fixation (7) dépassant vers l'extérieur est formé, lequel se met en prise, ou inversement, en cas de liaison à baïonnette fermée avec un évidement (8) réalisé au niveau de la contre-dépouille (6) correspondante de sorte que l'élément de fermeture (4) se laisse desserrer de plus en plus difficilement lorsqu'une pression intérieure croît,
**caractérisé en ce**
- **que** l'au moins un élément de fixation (7) présente un contour d'encliquetage (10), en particulier un nez d'encliquetage, alors qu'un encliquetage antagoniste (11) correspondant est disposé dans l'évidement (8),
- **que** l'élément de fermeture (4) est assuré contre un autodétachement axial avec le contour d'encliquetage (10).

2. Dispositif de fermeture selon la revendication 1,
**caractérisé en ce**
**qu'**au niveau de l'élément de fermeture (4), un joint torique (9) est disposé, lequel se pose de manière étanche contre une surface enveloppe intérieure de la conduite fluidique (2).

3. Dispositif de fermeture selon la revendication 2,
**caractérisé en ce**
**que** les au moins deux ailes de baïonnette (5) présentent respectivement une étendue radiale qui correspond à un tiers du diamètre du joint torique (9).

4. Dispositif de fermeture selon l'une quelconque des revendications 1 à 3,
**caractérisé en ce**
**que** l'élément de fermeture (4) et/ou la tubulure de prise (3) est/sont réalisé(s) comme partie moulée par injection de plastique.

5. Dispositif de fermeture selon l'une quelconque des revendications 1 à 4,
**caractérisé en ce**
**que** chaque aile de baïonnette (3) s'étend sur un angle périphérique d'au moins 25°.

6. Dispositif de fermeture selon l'une quelconque des revendications 1 à 5,
**caractérisé en ce**
**qu'**au niveau de l'élément de fermeture (4), un contour de prise (12) est disposé pour un outil de tournage, en particulier un polygone interne.

7. Module de filtre à huile (13) réalisé comme une partie moulée par injection de plastique avec un dispositif de fermeture (1) selon l'une quelconque des revendications 1 à 6 pour la fermeture d'une conduite fluidique (2) sollicitée par pression, en particulier une conduite d'huile.
